# EUROPÄISCHE PATENTSCHRIFT

(11) **EP 0 502 399 B1**
(45) Veröffentlichungstag und Bekanntmachung des Hinweises auf die Patenterteilung: **15.05.1996**
(21) Anmeldenummer: 92103091.2
(22) Anmeldetag: 24.02.1992
(51) Int. Cl.: C01B 35/14, C04B 35/58, C08G 77/62

(54) **Siliciumbornitridkeramik und Vorläuferverbindungen, Verfahren zu deren Herstellung sowie deren Verwendung**
Siliconboronitride ceramic and precursors, process for their preparation as well as their use
Céramique de nitrure de silicium-bore et précurseurs, procédé pour leur préparation ainsi que leur utilisation

(30) Priorität: 06.03.1991 DE 4107108
(43) Veröffentlichungstag der Anmeldung: 09.09.1992
(73) Patentinhaber: BAYER AG, D-51368 Leverkusen (DE)
(72) Erfinder: Jansen, Martin, Prof. Dr., W-5300 Bonn (DE); Baldus, Hans-Peter, Dr., W-5093 Burscheid (DE); Wagner, Oliver, W-5300 Bonn (DE)

(56) Entgegenhaltungen:
- EP-A- 0 389 084
- EP-A- 0 392 941
- US-A- 4 707 556
- NATO ASI SER., SER. E, 141 (TRANSFORM. ORGANOMET. COMMON EXOT. MATER.) 1988,
- Seiten 89 - 96 K.J. WYNNE

## Beschreibung

Die vorliegende Erfindung betrifft neue Trichlorsilylaminoborane, neue Borosilazanverbindungen, neue Oligo- oder Polyborosilazanverbindungen, die das Strukturmerkmal ≡Si-NH-B= aufweisen, ein Siliciumbornitridkeramikpulver, keramisches Material auf der Basis SiN und BN, Verfahren zur jeweiligen Herstellung sowie die Verwendung der Polyborosilazane und der keramischen Materialien.

Der Werkstoff Siliciumnitrid ist aufgrund seiner Festigkeit und seiner Korrosionsbeständigkeit prinzipiell gut geeignet für Turbolader, Turbinen von Düsentriebwerken sowie Auskleidung von Raketendüsen und Brennkammern.

Allerdings spielen für die obengenannten Anwendungen neben der mechanischen Belastbarkeit und der Korrosionsbeständigkeit bei hohen Temperaturen noch zwei weitere Größen eine wichtige Rolle und zwar die Thermoschockbeständigkeit und die Hochtemperaturfestigkeit. Die Werte für diese wichtigen Werkstoffdaten sind bei den zur Zeit erhältlichen Siliciumnitridbauteilen, die zu einem Anteil von ca. 10 Gew.-% aus oxidischen Sinterhilfsmitteln bestehen, aufgrund der beim Sintern sich an den Korngrenzen bildenden oxidischen Glasphasen für hohe thermische Belastungen noch nicht ausreichend.

Der US-A-4 007 049 ist zu entnehmen, daß eine Herabsetzung des Elastizitätsmoduls der Keramik die Thermoschockbeständigkeit erheblich verbessert. Dieses Ziel wurde in einigen Fällen durch die Darstellung von Komposits erreicht. Diese zweiphasigen Komposits bestehen aus einem keramischen Material mit einem hohen Elastizitätsmodul wie z.B. Mullit oder Al₂O₃ und einem keramischen Material mit niedrigem Elastizitätsmodul wie Bornitrid (US-A-4 304 870).

Die mechanischen Eigenschaften dieser Komposits liegen zwischen denjenigen der reinen Komponenten, das heißt, die Festigkeit bei Raumtemperatur nimmt im vorliegenden Beispiel mit steigendem BN-Anteil ab und die Thermoschockbeständigkeit dementsprechend zu. Im Gegensatz zu den phasenreinen Keramiken wird kein signifikanter Abfall der Festigkeit mit steigender Temperatur beobachtet.

Ähnliche Ergebnisse erhielten Ruh et al. (J. Am. Ceram. Soc. 1981, 64, 415, Mater. Sci. Eng. 71 (1985) 159-164) bei der Untersuchung von heißgepreßten Komposits, die aus Siliciumnitrid und Bornitrid bzw. Siliciumcarbid und Bornitrid bestehen. Mit zunehmendem Anteil an BN sinkt der Elastizitätsmodul ebenso wie die Raumtemperaturfestigkeit. Die Dielektrizitätskonstante ε wird durch Zugabe von Bornitrid kleiner, die Thermoschockbeständigkeit ist wie erwartet verbessert. In beiden Fällen verbleiben die Komponenten auch nach dem Heißpressen bei 1750°C als diskrete Phasen in dem Material zurück, da selbst bei den angewendeten hohen Drücken und Temperaturen die Diffusionskonstanten dieser kovalenten Verbindungen vernachlässigbar klein sind, bzw. keine Löslichkeit vorhanden ist. Trotz sorgfältiger Homogenisierung der Ausgangsmaterialien treten deshalb aufgrund einer statistischen Verteilung der Primärteilchen in den keramischen Bauteilen mikroskopische Inhomogenitäten auf, die zum Teil für die geringen Festigkeiten der Komposits verantwortlich sind.

Ein möglicher Weg zur Verbesserung der Homogenität solcher Keramiken wird in EP-A-389 084 beschrieben. Hier wird ein lösliches Polyhydridosilazan zusammen mit einer löslichen bororganischen Verbindung in einem Lösungsmittel im Autoklaven polymerisiert.

Das entstandene Polyborosilazan hat aufgrund der Copolymerisation der Borverbindung mit dem Polysilazan ein höheres Molekulargewicht als das ursprüngliche Polysilazan. Das Copolymerisat wird anschließend zu einem borhaltigen Keramikpulver pyrolysiert Dieses Verfahren führt aber naturgemäß nicht zu einer absolut homogenen Verteilung von Bor in einer Siliciumnitridkeramik, da ein Polymeres in Form des Polyhydridosilazans vorgelegt wird, das während der Reaktion als Block erhalten bleibt.

Ein weiterer Nachteil liegt in der geringen Variationsmöglichkeit des Boranteils in der Keramik, da ein Startpolymer gegenüber einem Monomer nur noch eine geringe Anzahl von Reaktionszentren aufweist, und somit nur wenig Bor in die Keramik eingebaut werden kann.

Gegenüber einer gewünschten Keramik, die nur aus Silicium, Bor und Stickstoff bestehen sollte, setzt sich eine gemaß der EP-A-389 084 hergestellte Keramik mindestens aus den Elementen Silicium (ca. 40 Gew.-%), Bor (ca. 5 Gew.-%), Kohlenstoff (ca. 2 Gew.-%), Stickstoff (ca. 35 Gew.-%) und Sauerstoff (ca. 12 Gew.-%) zusammen. Der relativ hohe Anteil an Sauerstoff liegt in Form von amorphem Borsilicatglas vor. Dieses Glas hat aufgrund seines niedrigen Erweichungspunktes und relativ großen Ausdehnungskoeffizienten einen negativen Einfluß auf die Hochtemperaturfestigkeit und die Temperaturwechselbeständigkeit eines keramischen Formkörpers.

Aufgabe dieser Erfindung ist die Bereitstellung neuartiger, einfach und in großen Ausbeuten darstellbarer, metallorganischer Vorläuferverbindungen sowie eines Verfahrens zur Herstellung von nitridischen Keramiken aus diesen Vorläuferverbindungen, die nur aus Si, B und N bestehen. Dieses Verfahren soll weiterhin eine vollständig homogene Verteilung der beteiligten Elemente gewährleisten und die oben beschriebenen Nachteile nichtaufweisen.

Diese Anforderungen werden durch molekulardisperse Keramiken, deren Vorläuferverbindungen, die jweiligen Verfahren zu deren Herstellung sowie die Verwendung von Polyborosilazanen und der keramischen Materialien, erfüllt, wie sie in ihrer bevorzugten Ausführungsform in den Patentansprüchen offenbart sind.

Überraschenderweise wurde nun gefunden, daß bei der Umsetzung von 1,1,1-Trichlor-3,3,3-Trimethyldisilazan CH₃Si-NH-SiCl₃ (A) mit BCl₃ zwei neue Verbindungen gebildet werden. Erstens ein Trichlorsilylamino-dichlorboran Cl₃Si-NH-BCl₂ (I) und zweitens ein Bis(trichlorsilylamino)-chlorboran (Cl₃Si-NH)₂BCl (II). Beide Molekülverbindungen zeichnen sich durch eine molekulare Silicium-Stickstoff-Bor-Bindung aus. Beide Verbindungen sind Gegenstand dieser Erfindung.

Die Darstellung der Ausgangsverbindung (A) gelingt in über 90 %iger Ausbeute aus Hexamethyldisilazan und Siliciumtetrachlorid durch Rühren bei Raumtemperatur.

Für die Darstellung von (A) liegt das Molverhältnis von Hexamethyldisilazan zu Siliciumtetrachlorid bevorzugt zwischen 1:10 und 4:1, bevorzugt bei 1:5.

Erfindungsgemäß entstehen die Verbindungen (I) und (II) in 85 %iger bzw. 30 %iger Ausbeute durch Zutropfen von Verbindung (A) auf BCl₃, das in einem inerten organischen Lösungsmittel gelöst sein kann (n-Hexan, Toluol, Ether). Die Molverhältnisse von Bortrichlorid zu (A) betragen zur Darstellung der Verbindung (I) zwischen 10:1 und 1:1, vorzugsweise zwischen 5:1 und 1:1, zur Darstellung der Verbindung (II) zwischen 1:1,5 und 1:10. Für Verbindung (I) liegt das Molverhältnis der Reaktanden bevorzugt bei 3:1, für Verbindung (XX) bei ca. 1:2. Die Reaktionstemperatur kann zwischen -100°C und +50°C variieren, der bevorzugte Wert liegt bei -78°C. Die so dargestellten Verbindungen (I) und (II) lassen sich auf einfache Weise durch eine Ammonolysereaktion und anschließende Pyrolyse zu einem N-Si-N-B-N-Keramikpulver umwandeln. Das Verhältnis von Silicium zu Bor in den erfindungsgemäßen Si-N-B-N-Keramikpulvern kann man durch Mischen der flüssigen Verbindungen SiCl₄ und/oder Hexachlordisilazan, mit (I) und/oder (II) stufenlos von 100:0 (reines Siliciumtetrachlorid) bis hin zu 50:50 (reine Verbindung (I)) einstellen.

Für die Reaktion mit NH₃ kann man alle literaturbekannten Ammonolyseverfahren von Siliciumtetrachlorid nutzen; das betrifft die Umsetzung mit festem bzw. flüssigem Ammoniak bei tiefen Temperaturen (US-A-4 196 178), die Reaktion mit gasförmigem Ammoniak in einem organischen Lösungsmittel (US-A-3 959 446) oder die Umsetzung mit NH₃ in einer Hochtemperaturreaktion unter Abspaltung von Chlorwasserstoff (US-A-4 145 224).

Nach der Abtrennung des anfallenden Ammoniumchlorids durch bekannte Methoden wie Sublimation oder Waschen mit flüssigem Ammoniak wird ein polymeres Imid erhalten, das noch viele NH- bzw. NH₂-Gruppen enthält Dieses polymere Imid wird anschließend erfindungsgemäß unter einem Stickstoffstrom bei Temperaturen zwischen 600°C und 1450°C, bevorzugt zwischen 950°C und 1400°C calciniert. Neben Stickstoff können auch Argon, Ammoniak oder andere Inert- oder Reaktionsgase als Calcinierungsgase Verwendung finden.

Das auf diese Weise dargestellte amorphe keramische Material besteht in den Hauptkomponenten aus Si, N und B und kann in Spuren auch Cl, H, C und O enthalten. Es weist erfindungsgemäß eine Struktur auf, die aus N-Si-N-B-N-Einheiten besteht. Diese ist gegen Luftsauerstoff relativ inert, so daß es ohne weitere Nachbehandlung als ingenieurkeramisches Pulver verwendet werden kann. Elektronenrastermikroskopische Aufnahmen belegen, daß mindestens bis zur lateralen Abmessung von 0,5 µm eine völlig homogene Elementverteilung vorliegt. Die Kristallisation des amorphen Materials zu einem Si₃N₄/BN-Keramikpulver erfolgt durch Temperaturbehandlung bevorzugt zwischen 1450°C und 1750°C. In dieser Keramik sind Si₃N₄- und BN-Kristallite erfindungsgemäß völlig homogen im Nanometermaßstab verteilt. Die Kristallitgröße der Primärteilchen beträgt im Durchschnitt zwischen 0,01 µm und 1 µm. Sie liegt bevorzugt zwischen 0,1 µm und 0,7 µm. Die Oberfläche des Pulvers beträgt je nach Temperaturbehandlung zwischen 5 und 100 m²/g, bevorzugt zwischen 8 und 30 m²/g.

TGA-Messungen an den feinteiligen amorphen Pulvern zeigen, daß die Zersetzung dieser Pulver in ihre Elementarbestandteile bei ca. 1600°C anfängt, dieser Wert liegt um ca 200°C höher als der Zersetzungsbeginn von reinem amorphem Siliciumnitridpulver ähnlicher Morphologie, das schon ab 1350°C merkliche Mengen Stickstoff verliert. Dieser Vergleich unterstreicht die besondere Eignung der erfindungsgemäßen Siliciumbornitridkeramiken für Hochtemperaturanwendungen.

Durch Umsetzung der Verbindungen (I) und (II) mit primären oder sekundären Alkyl- bzw. aromatischen Aminen wie z.B. Methylamin, Ethylamin, Dimethylamin oder Anilin lassen sich monomere oder oligomere Reaktionsprodukte der Formel (NRR')₃Si-NH-B(NRR')₂ bzw. [-(NR)₂Si-NH-B(NR)-]ₓ erhalten, dabei können R und R' gleich oder verschieden sein und aus C₁-C₆-Alkyl, Wasserstoff, Phenyl oder Vinyl bestehen. Zur Herstellung dieser Borosilazanverbindungen müssen mindestens 10 Mol Organylamin pro Mol Verbindung 1 bzw. der Verbindung II eingesetzt werden. Die Reaktion kann sowohl mit den reinen Komponenten als auch in einem aprotischen Lösemittel durchgeführt werden. Bevorzugte Lösemittel sind Hexan, Toluol, THF oder Methylenchlorid. Die Reaktionstemperaturen liegen zwischen -80°C und +300°C, bevorzugt zwischen -20°C und +5°C. Die monomeren oder oligomeren Einheiten zeichnen sich dadurch aus, daß die erste Koordinationssphäre jeder Silicium- oder Boratoms nur aus Stickstoffatomen besteht. Sie können anschließend durch eine Temperaturbehandlung oder durch Vernetzung mit Ammoniak zu Polymeren umgewandelt werden.

Die Konsistenz der so entstandenen erfindungsgemäßen Polyborosilazane reicht je nach Rest R, R' oder Polymerisationsgrad von leicht viskos über harz- bzw. wachsartig bis hin zum festen, kristallinen Zustand. Die thermische Vernetzung erfolgt durch Abspaltung von einem Aminrest unter Knüpfüng von neuen Si-N-B-N-, Si-N-Si-N- oder B-N-B-N-Bindungen.

Die Vernetzung mittels Ammoniak erfolgt durch Substitution einer NRR'-Gruppe oder einer NR-Gruppe durch eine NH₂- oder eine NH-Gruppe, die dann weiter vernetzt. Beide Reaktionen können sowohl in offenen Systemen als auch in geschlossenen Systemen erfolgen (Autoklav). Die Polymerisationstemperatur liegt zwischen -20°C und +300°C, die Polymerisationsdauer zwischen 5 Minuten und 10 Tagen.

Gegenstand dieser Erfindung ist weiterhin die Verwendung der erfindungsgemäßen Polyborosilazane zur Herstellung von keramischem Material durch Pyrolyse in inerter oder NH₃-haltiger Atmosphäre bei Temperaturen von 800 bis 1800°C, bevorzugt bei 1450°C. Die keramischen Ausbeuten der Pyrolysen betragen zwischen 65 % und 80 %.

Das Pyrolyseprodukt ist ein keramisches Material, das zu über 98 % aus den Elementen Si, B, N und C besteht. Es kann amorph oder kristallin anfallen. Die kristallinen Phasen beinhalten Si₃N₄, BN, SiC und B₄C.

Da die erfindungsgemäßen Polyborosilazane in einer Vielzahl von organischen Lösungsmitteln löslich sind, lassen sie sich in Form einer Lösung zu geeigneten Halbzeugen oder Formkörpern wie z.B. Fasern, Folien oder Beschichtungen verarbeiten. Die hochviskosen bis wachsartigen Polyborosilazane können außerdem auch direkt zu geeigneten Formkörpern gesponnen oder gepreßt werden.

Die so erhaltenen Formkörper können vor einer Pyrolyse einer physikalischen oder chemischen (Härtung, Vernetzung) Vorhandlung unterzogen werden, die den Zweck hat, das Silazanharz unschmelzbar zu machen.

Nachfolgend wird die Erfindung anhand einiger Beispiele naher erläutert, ohne daß hierin eine Einschränkung zu sehen ist.

### Beispiel 1

### Darstellung von 1,1,1-Trichlor-3,3,3-trimethyldisilazanen (A)

Im 250 ml-Dreihalskolben wurden 70 g Siliciumtetrachlorid (0,41 Mol) und 12,5 g Hexamethyldisilazan (0,08 Mol) zusammengegeben und 20 h bei Raumtemperatur gerührt. Die anschließende fraktionierte Destillation über eine kurze Vigreuxkolonne ergab 16,2 g (92 %) der farblosen Flüssigkeit 1,1,1-Trichlor-3,3,3-trimethyldisilazan.
Sdp.: 70°C/35 torr, ¹H-NMR (ClCl₃) δ=0,21 ppm, MS (EI) m/z= 218 amu (M⁺).

### Beispiel 2

### Darstellung von N-(Trichlorsilylamino)-dichlorboran (I)

163 g (1,39 Mol) Bortrichlorid wurden bei -5°C in einem 500 ml-Dreihalskolben einkondensiert. Anschließend ließ man bei ca. 0°C bis -5°C 162,5 g 1,1,1-Trichlor-3,3,3-trimethyldisilazan langsam (1 Tropfen/sec) unter starkem Rühren zutropfen. Nach Beendigung der Zugabe wurde noch ca. 1 Stunde bei 0°C gerührt und anschließend langsam auf Raumtemperatur erwärmt. Die trübe Flüssigkeit wurde fraktioniert destilliert Bei 35°C und 8 mbar erhielt man 144,4 g (86 %) der Verbindung (I) als klare, sehr hydrolyseempfindliche Flüssigkeit.
MS (EI) m/z= 229 (M⁺), ¹H-NMR (TMS, CDCl₃) δ_{N-H} = 5,15 ppm,
¹¹B-NMR (BF₃*Et₂O) δ_{B} = 37 ppm, ²⁹Si-NMR (TMS δ_{Si} = -23 ppm.

### Beispiel 3

### Darstellung von Bis-(thrichlorsilylamino)-chloroboran (II)

Die Darstellung von Verbindung (II) erfolgt analog zur Darstellung von Verbindung (I) (Beispiel 2), allerdings mit umgekehrtem Molverhältnis von Verbindung (A) zu Bortrichlorid.

In einem normalen Ansatz wurden 41 g (0,35 Mol) Bortrichlorid in einen 250 ml-Dreihalskolben einkondensiert. Anschließend tropfte man bei einer Temperatur von ca. 0°C 155 g (0,7 Mol) Verbindung (A) mit einer Geschwindigkeit von einem Tropfen/sec zu. Die weitere Umsetzung und die Aufarbeitung der Reaktionsprodukte wurde wie in Beispiel 2 beschrieben durchgeführt. Bei einem Druck von 0,1 mbar und einer Temperatur von 26°C destillierten 36 g (30 %) (II) als klare, sehr hydrolyseempfindliche Flüssigkeit über.
MS (EI) m/z = 342 (M⁺), ¹H-NMR (TMS, CDCl₃) δ_{N-H}= 4,15 ppm,
¹¹B-NMR (BF₃*Etherat) δ_{B} = 30ppm, ²⁹Si-NMR (TMS) δ_{Si} = -27 ppm.

### Beispiel 4

### Ammonolyse von Trichlorsilylamino-dichlorboran (I)

In einen 500 ml-Dreihalskolben wurden 200 ml (9 Mol) flüssiger Ammoniak (99,999 %) einkondensiert. Anschließend tropfte man unter starkem Rühren langsam (1 Tropfen/sec) 50 g der Verbindung (I) (0,22 Mol) bei einer Temperatur von -78°C zu. Danach rührte man die Suspension aus Imid, NH₄Cl und flüssigem Ammoniak noch ca. eine Stunde, um zu gewährleisten, daß sich möglichst viel Ammoniumchlorid in dem Ammoniak löst. Nach Abfiltrieren des Rückstandes wusch man diesen noch 10 bis 20 mal mit flüssigem Ammoniak, bis eine in Wasser zersetzte Probe des Imids bei Zugabe von Silbernitrat keine Trübung mehr aufwies.

### Beispiel 5

### Ammonolyse einer Mischung von Hexachlordisilazan (Cl₃Si-NH-SiCl₃) und Trichlorsilylamino-dichlorboran (I)

In einen 500 ml-Dreihalskolben wurden 200 ml (9 Mol) flüssiger Ammoniak (99,999 %) einkondensiert. Anschließend tropfte man unter starkem Rühren langsam (1 Tropfen/sec) eine Mischung von 5 g der Verbindung (I) (0,022 Mol) und 62 g (0,22 Mol) Hexachlordisilazan bei einer Temperatur von -78°C zu. Dies entspricht einem (Si:B)-Verhältnis von 10:1.

Danach rührte man die Suspension aus polymerem Imid, NH₄Cl und flüssigem Ammoniak noch ca. eine Stunde, um zu gewährleisten, daß sich möglichst viel Ammoniumchlorid in dem Ammoniak löst. Nach Abfiltrieren des Rückstandes wusch man diesen noch 10 bis 20 mal mit flüssigem Ammoniak, bis eine in Wasser zersetzte Probe des Imids bei Zugabe von Silbernitrat keine Trübung mehr aufwies.

### Beispiel 6

### Darstellung einer Borosilazanverbindung

100 ml Methylamin wurden in einem evakuierten 500 ml-Dreihalskolben mit 500 ml-Tropftrichter ohne Druckausgleichsrohr bei -78°C einkondensiert. Anschließend gab man 10 g (43,7 mmol) Verbindung (I), gelöst in 250 ml Petrolether, unter starkem Rühen so zu, daß die Innentemperatur nicht über -20°C anstieg. Der Feststoff, der im wesentlichen aus Methylaminhydrochlorid bestand, wurde mit einer Umkehrfritte abfiltriert. Von der klaren Petroletherlösung wurde das Lösungsmittel abgesaugt. Es blieb ein farbloses, zähflüssiges Öl zurück (7 g).
¹H-NMR: 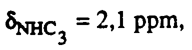
Intensität: 10; δ_{NH} = 0,2 ppm, Intensität: 2;
¹¹B-NMR: δ = 24,4 ppm, ²⁹Si-NMR: δ = -38 ppm,
¹³C-NMR: 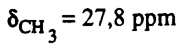
IR: 3420 cm⁻¹ (NH-Streckschwingung), 2870 cm⁻¹, 2800 cm⁻¹,
(CH-Streckschwingung), 1400 cm⁻¹, 1100 cm⁻¹, 800 cm⁻¹.

### Beispiel 7

### Darstellung eines Polyborosilazans

5 g gemäß Beispiel 6 erhaltenen Öls wurden in einem 50 ml-Kolben unter Schutzgas auf 50°C erhitzt. Anschließend leitete man gasförmigen Ammoniak mit einer Rate von 4 ml/min durch die Flüssigkeit. Es entstand innerhalb von zwei Stunden ein hochviskoses, wachsartiges, glasklares Polymer.

Da die Methylaminogruppen partiell durch Imidgruppen ersetzt worden sind, wurde die Intensität der CH-Banden im IR-Spektrum dieses Polymeren deutlich geringer als die Intensität der CH-Banden der Verbindung im Beispiel 6, während die Intensität der NH-Bande signifikant zunahm.

Dieses Polymer wurde anschließend unter Stickstoff bei 1000°C pyrolysiert. Es entstand ein schwarzes Pulver mit einem Kohlenstoffgehalt von 10,4 %. Die Ausbeute an keramischem Material betrug ca. 70 %.

### Beispiel 8

### Umwandlung eines nach Beispiel 4 oder 5 erhaltenen Imids in ein amorphes Si-N-B-N-Keramikpulver bzw. in ein kristallines Si₃N₄/BN-Kompositpulver

Das gemäß Beispiel 4 erhaltene polymere Imid wurde in einem Röhrenofen im Ammoniakstrom auf 900°C erhitzt und bei dieser Temperatur ca. 30 min getempert, um evtl. noch vorhandene Spuren von NH₄Cl auszutreiben. Anschließend wurde das Material in einem Stickstoffstrom mit 10°C/min auf 1300°C aufgeheizt und dort für weitere zwei Stunden calciniert.

Da das polymere Imid sich vollständig zu einer nitridischen Keramik umgewandelt hat, wies das IR-Spektrum des so behandelten Materials keine NH-Banden mehr auf. Das erhaltene Pulver blieb röntgenamorph. Die Oberfläche betrug 45 m²/g.

Die Umwandlung des amorphen Si-N-B-N-Keramikpulvers zu einem kristallinen Si₃N₄/BN-Komposit mit gleichmäßig mikroskopisch verteilten BN-Partikeln in einer Siliciumnitridmatrix erfolgte durch zehnstündiges Tempern bei 1550°C.Die Oberfläche dieses Pulvers betrug anschließend 15 m²/g.

Analyse einer Zusammensetzung gemäß Beispiel 4:
Si 39,5 Gew.-%, N 45,1 Gew.-%, Cl 0,05 Gew.-%, B 14,9 Gew.-%, O 0,3 Gew.-%

Analyse einer Zusammensetzung gemäß Beispiel 5:
Si 52,0 Gew.-%, N 44,7 Gew.-%, Cl 0,01 Gew.-%, B 2,1 Gew.-%, O 1,2 Gew.-%

## Patentansprüche

1. Trichlorsilylamino-borane der Strukturformel
Cl₃Si-NH-BClX,
wobei
X = Cl (I)
oder
X = NH-Si-Cl₃ (II)
bedeutet.

2. Verfahren zur Herstellung von (I) und (II), dadurch gekennzeichnet, daß 1,1,1-Trichlor-3,3,3-trimethyldisalazan mit BCl₃ bei Temperaturen zwischen -100°C und +50°C umgesetzt und anschließend die Reaktionsmischung fraktioniert wird.

3. Verfahren zur Herstellung von (I) gemäß Anspruch 2, dadurch gekennzeichnet, daß das Verhältnis der Reaktanden 1,1,1-Trichlor-3,3,3-trimethyldisilazan zu Bortrichlorid zwischen 1:1 und 1:10 beträgt.

4. Verfahren zur Herstellung von (II) gemäß Anspruch 2, dadurch gekennzeichnet, daß das Verhältnis der Reaktanden 1,1,1-Trichlor-3,3,3-trimethyldisilazan zu Bortrichlorid zwischen 1,5:1 und 10:1 liegt.

5. Monomere oder oligomere Borosilazanverbindungen, dadurch gekennzeichnet, daß die Chloratome der Verbindungen (I) und (II) gemäß Anspruch 1 ganz oder teilweise durch Organylaminogruppen R,R'-N- substituiert sind, wobei R bzw. R' gleich oder verschieden sein können, Wasserstoff, C₁-C₆-Alkyl, Phenyl oder Vinyl bedeuten.

6. Verfahren zur Herstellung der Borosilazanverbindungen gemäß Anspruch 5, dadurch gekennzeichnet, daß Verbindungen des Typs (I) oder (II) mit mindestens 10 Mol eines Organylamins pro Mol der Verbindung I oder 14 Mol pro Mol der Verbindung II in einem Lösungsmittel bei Temperaturen von -80°C bis +300°C umgesetzt werden.

7. Verfahren gemäß Anspruch 6, dadurch gekennzeichnet, daß als Organylaminoverbindungen R₂NH oder RNH₂ eingesetzt werden, wobei R C₁-C₆-Alkyl, Vinyl oder Phenyl bedeutet.

8. Polyborosilazanverbindungen die das Strukturmerkmal ≡Si-NH-B= aufweisen dadurch erhältlich, daß Borosilazanverbindungen gemäß Anspruch 5 durch thermische Polymerisation oder durch Umsetzung mit Ammoniak in offenen oder geschlossenen Systemen unter Normaldruck oder erhöhtem Druck bei Temperaturen zwischen -20°C und 300 erhalten werden.

9. Verfahren zur Herstellung eines Siliciumbornitridkeramikpulvers, dadurch gekennzeichnet, daß man Verbindungen (I) und/oder (II) mit festem, flüssigem oder gasförmigem Ammoniak bei Temperaturen zwischen -200°C und +1400°C ammonolysiert und das entstehende Produkt in N₂, Argon und/oder NH₃ bei Temperaturen zwischen 800 und 1400°C calciniert.

10. Amorphes Siliciumbornitridkeramikpulver erhältlich durch das Verfahren gemäß Anspruch 9, dadurch gekennzeichnet, daß in der Keramik Si-N-B-N-Bindungen vorliegen und die Elemente Si, N und B zu mehr als 98 Gew.-% enthalten sind.

11. Kristallines Kompositkeramikpulver aus Si₃N₄ und BN, erhältlich durch Kristallisation des amorphen Siliciumbornitridkeramikpulvers gemäß Anspruch 10, dadurch gekennzeichnet, daß das Si₃N₄ und das BN in molekulardisperser Verteilung vorliegen.

12. Verfahren zur Herstellung von keramischem Material, dadurch gekennzeichnet, daß oligomere oder polymere Polyborosilazanverbindungen gemäß einem der Ansprüche 5 oder 8 in inerter oder NH₃-haltiger Atmosphäre bei Temperaturen von 800 bis 1800°C pyrolysiert werden.

13. Keramisches Material erhältlich durch das Verfahren gemäß Anspruch 12, dadurch gekennzeichnet, daß in der Kerarmik N-Si-N-B-N-Bindungssequenzen vorliegen und die Elemente Si, N, B und C zu mehr als 98 Gew.-% enthalten sind.

14. Verwendung der Polyborosilazane gemäß Anspruch 8 zur Herstellung von keramischen Fasern, keramischen Beschichtungen und keramischen Formkörpern.

15. Verwendung der keramischen Materialien gemäß einem oder mehreren der Ansprüche 10 bis 12 zur Herstellung von keramischen Formkörpern und keramischen Beschichtungen.

## Claims

1. Trichlorosilylamino boranes of the structural formula
Cl₃Si-NH-BClX
where
X = Cl (I)
or
X = NH-Si-Cl₃ (II).

2. Process for the production of (I) and (II), characterised in that 1,1,1-trichloro-3,3,3-trimethyldisalazane is caused to react with BCl₃ at temperatures between -100°C and +50°C and the reaction mixture is then fractionated.

3. Process for the production of (I) according to Claim 2, characterised in that the ratio of the reactants 1,1,1-trichloro-3,3,3-trimethyldisalazane to boron trichloride amounts to between 1:1 and 1:10.

4. Process for the production of (II) according to Claim 2, characterised in that the ratio of the reactants 1,1,1-trichloro-3,3,3-trimethyldisalazane to boron trichloride amounts to between 1.5:1 and 10:1.

5. Monomeric or oligomeric borosilazane compounds, characterised in that the chlorine atoms of the compounds (I) and (II) according to Claim 1 are entirely or partially substituted by organylamino groups R,R'-N-, where R and R' may be the same or different and signify hydrogen, C₁-C₆-alkyl, phenyl or vinyl.

6. Process for the production of the borosilazane compounds according to Claim 5, characterised in that compounds of the type (I) or (II) are caused to react with at least 10 mol of an organylamine per mol of the compound (I) or 14 mol per mol of the compound (II) in a solvent at temperatures from -80°C to +300°C.

7. Process according to Claim 6, characterised in that by way of organylamino compounds use is made of R₂NH or RNH₂, where R signifies C₁-C₆-alkyl, vinyl or phenyl.

8. Polyborosilazane compounds exhibiting the structural characteristic Si-NH-B, obtainable in that borosilazane compounds according to Claim 5 are obtained by thermal polymerisation or by reaction with ammonia in open or closed systems under normal pressure or elevated pressure at temperatures between -20°C and 300°C.

9. Process for the production of a silicon boronitride ceramic powder, characterised in that compounds (I) and/or (II) are ammonolysed with solid, liquid or gaseous ammonia at temperatures between -200°C and +1400°C and the resulting product is calcined in N₂, argon and/or NH₃ at temperatures between 800 and 1400°C.

10. Amorphous silicon boronitride ceramic powder, obtainable by means of the process according to Claim 9, characterised in that Si-N-B-N bonds are present in the ceramic and the elements Si, N and B are present in a proportion amounting to more than 98 wt-%.

11. Crystalline composite ceramic powder consisting of Si₃N₄ and BN, obtainable by crystallisation of the amorphous silicon boronitride ceramic powder according to Claim 10, characterised in that the Si₃N₄ and the BN are distributed in molecularly dispersed manner.

12. Process for the production of ceramic material, characterised in that oligomeric or polymeric polyborosilazane compounds according to one of Claims 5 or 8 are pyrolysed in inert atmosphere or in an atmosphere containing NH₃ at temperatures from 800 to 1800°C.

13. Ceramic material, obtainable by means of the process according to Claim 12, characterised in that N-Si-N-B-N bond sequences are present in the ceramic and the elements Si, N, B and C are present in a proportion amounting to more than 98 wt-%.

14. Use of the polyborosilazanes according to Claim 8 for the production of ceramic fibres, ceramic coatings and ceramic moulded bodies.

15. Use of the ceramic materials according to one or more of Claims 10 to 12 for the production of ceramic moulded bodies and ceramic coatings.

## Revendications

1. Trichlorosylilamino-boranes de formule structurelle:
Cl₃Si-NH-BClX,
dans laquelle
X = Cl (I)
ou
X = NH-Si-Cl₃ (II).

2. Procédé pour la fabrication de (I) et de (II), caractérisé en ce que l'on fait réagir du 1,1,1-trichloro-3,3,3-triméthyldisilazane avec BCl₃ à des températures situées entre -100°C et +50°C, et que le mélange de réaction est ensuite soumis à une distillation fractionnée.

3. Procédé pour la fabrication de (I) selon la revendication 2, caractérisé en ce que le rapport des réactifs 1,1,1-trichloro-3,3,3-triméthyldisilazane au trichlorure de bore vaut entre 1:1 et 1:10.

4. Procédé pour la fabrication de (II) selon la revendication 2, caractérisé en ce que le rapport des réactifs 1,1,1-trichloro-3,3,3-triméthyldisilazane au trichlorure de bore vaut entre 1,5:1 et 10:1.

5. Composés monomères ou oligomères de borosilazane, caractérisés en ce que les atomes de chlore des composés (I) et (II) selon la revendication 1 sont totalement ou partiellement substitués par des groupes organiques amino R,R'-N-, tandis que R et R' peuvent être identiques ou différents ou représentent l'hydrogène, un alkyle en C₁-C₆, un phényle ou un vinyle.

6. Procédé pour la fabrication des composés de borosilazane selon la revendication 5, caractérisé en ce que l'on fait réagir des composés du type (I) ou (II) avec au moins 10 moles d'une amine organique par mole du composé I ou 14 moles par mole du composé II, dans un solvant organique, à des températures de -80°C à +300°C.

7. Procédé selon la revendication 6, caractérisé en ce que l'on utilise comme composé aminé organique R₂NH ou RNH₂, tandis que R représente un alkyle en C₁-C₆, un vinyle ou un phényle.

8. Composés de polyborosilazane présentant la caractéristique structurelle ≡Si-NH-B=, pouvant être obtenus en ce que des composés de borosilazane selon la revendication 5 sont obtenus par polymérisation thermique ou par réaction avec l'ammoniac dans des systèmes ouverts ou fermés, sous pression normale ou pression supérieure, à des températures situées entre -20°C et 300.

9. Procédé pour la fabrication d'une poudre céramique de nitrure de silicium et de bore, caractérisé en ce que l'on ammonolyse des composés (I) et/ou (II) avec de l'ammoniac solide, liquide ou gazeux, à des températures situées entre -200°C et +1400°C, et en ce que l'on calcine le produit obtenu dans N₂, l'argon et/ou NH₃, à des températures situées entre 800 et 1400°C.

10. Poudre de céramique de nitrure de silicium et de bore amorphe, pouvant être obtenue par le procédé selon la revendication 9, caractérisée en ce que dans la céramique existent des liaisons Si-N-B-N, et en ce que les éléments Si, N et B sont contenus à des teneurs supérieures à 98% en poids.

11. Poudre de céramique composite cristalline de Si₃N₄ et BN, pouvant être obtenue par cristallisation de la poudre de céramique de nitrure de silicium et de bore amorphe selon la revendication 10, caractérisée en ce que Si₃N₄ et BN sont présents sous la forme d'une distribution au niveau moléculaire.

12. Procédé pour la fabrication d'un matériau céramique, caractérisé en ce que des composés ologomères ou polymères de polyborosilazane selon l'une des revendications 5 ou 8 sont pyrolysés dans une atmosphère inerte ou convenant NH₃, à des températures de 800 à 1800°C.

13. Matériau céramique pouvant être obtenu par le procédé selon la revendication 12, caractérisé en ce que dans la céramique existent des séquences de liaisons N-Si-N-B-N-, et en ce que les éléments Si, N, B et C sont contenus à des teneurs supérieures à 98% en poids.

14. Utilisation des polyborosilazanes selon la revendication 8 pour la fabrication de fibres céramiques, de revêtements céramiques et de corps façonnés en céramique.

15. Utilisation des matériaux céramiques selon l'une ou plusieurs des revendications 10 à 12, pour la fabrication de corps façonnés en céramique et de revêtements céramiques.
